# EUROPÄISCHE PATENTSCHRIFT

(11) **EP 2 245 329 B1**
(45) Veröffentlichungstag und Bekanntmachung des Hinweises auf die Patenterteilung: **19.03.2014**
(21) Anmeldenummer: 09704833.4
(22) Anmeldetag: 13.01.2009
(51) Int. Cl.: F16D 65/097, F16D 66/00

(54) **SCHEIBENBREMSE**
DISK BRAKE
FREIN À DISQUE

(30) Priorität: 22.01.2008 DE 102008005430
(43) Veröffentlichungstag der Anmeldung: 03.11.2010
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GEISSLER, Steffen, 63110 Rodgau (DE); PITZING, Stephan, 81675 München (DE)
(74) Vertreter: Mattusch, Gundula
(86) Internationale Anmeldenummer: PCT/EP2009/000134
(87) Internationale Veröffentlichungsnummer: WO 2009/092525

(56) Entgegenhaltungen:
- WO-A-03/029682
- WO-A-2008/000578
- DE-A1- 19 849 309

## Beschreibung

Die Erfindung betrifft eine Scheibenbremse gemäß dem Oberbegriff des Anspruchs 1.

Für viele Steuerungsaufgaben von vorzugsweise pneumatisch oder elektromechanisch betätigbaren Scheibenbremsen ist eine genaue Kenntnis der beim Bremsen aufgebrachten Zuspannkraft von Bedeutung, die dann als eine Messgröße dient.

Während bei hydraulisch betätigten Scheibenbremsen über den Druck der Bremsflüssigkeit ein geeignetes, mit der Zuspannkraft korrelierendes Signal erzeugt werden kann, ist die Ermittlung der Zuspannkraft bei elektromechanisch betriebenen Scheibenbremsen nur mit einem erheblichen konstruktiven und fertigungstechnischen Aufwand möglich.

Solche Scheibenbremsen werden zur Erzielung eines stabilen Regelungsverhaltens positionsgesteuert betrieben. Dabei wird die Position des Bremsenstellgliedes über eine Erfassung der Drehwinkelstellung des Antriebsmotors ermittelt, wobei der Zusammenhang zwischen der Drehwinkelstellung und einer erzielten Wirkung der Scheibenbremsen großen Fremdeinflüssen unterliegt. Hierzu zählen z.B. der Verschleißzustand, eine temperaturabhängige Kompressibilität der Bremsbeläge, das Maß des Lüftspiels, also der Abstand zwischen dem Bremsbelag und einer Bremsscheibe in ungebremster Stellung, sowie Einflüsse eines Schrägverschleißes der Bremsbeläge.

Aus diesen Gründen ist es vorteilhaft, durch Erfassung geeigneter physikalischer Zustände der Scheibenbremse eine genaue Rückmeldung über die erzielte Bremswirkung zu erhalten.

Dazu ist es bekannt, die Zuspannkraft mittels Kraftsensoren zu erfassen, die im Kraftfluss innerhalb der Bremsmechanik angeordnet sind (DE 101 48 472 A1 und WO 03/029 682 A).

In der Praxis hat sich jedoch gezeigt, dass diese Kraftsensoren, die bei Nutzfahrzeugbremsen Spannkräfte von mehr als 100 kN aufnehmen müssen, insbesondere aufgrund der herrschenden rauen Betriebsbedingungen relativ störanfällig sind.

Neben der daraus sich ergebenden geringen Standzeit der Sensoren ist auch der dann notwendige Austausch nur mit erheblichem, insoweit beklagenswertem Montageaufwand möglich, da die Positionierung der Sensoren funktionsbedingt im Innern der Bremsmechanik einen Austausch sehr erschwert.

Zudem ist bei einer Scheibenbremse mit mehren Druckstücken bzw. Stellspindeln, mit denen die Bremsbeläge an die Bremsscheibe pressbar sind, eine entsprechende Anzahl von Sensoren erforderlich, woraus sich naturgemäß erhebliche Kosten sowohl für die Beschaffung der Sensoren als auch deren Installation und Verschaltung sowie für eine zugehörige Auswerteelektronik ergeben.

Alles in allem stellt das bislang eingesetzte Verfahren zur Ermittlung der Zuspannkraft ebenso wie die hierzu konfigurierte Scheibenbremse einen äußerst unbefriedigenden Stand der Technik dar.

Aus der EP 1 748 213 A1 ist eine Scheibenbremse bekannt, bei der die Zuspannkraft durch eine Einrichtung ermittelt wird, die im Wesentlichen durch das Spreizmaß eines Spaltes ermittelt wird, der im Bremssattel vorgesehen ist. Dies setzt allerdings eine entsprechende Konfiguration des Bremssattels voraus, die einen L-förmigen Verlauf des Spaltes einschließt.

Insgesamt ist diese Ausbildung des Bremssattels mit erheblichen Nachteilen verbunden, wozu neben der relativ aufwendigen Herstellung die dauerhaft fehlende Funktionssicherheit zählt, die vor allem aufgrund einer Verschmutzungsgefahr des gebildeten Spaltes eingeschränkt ist.

Der Erfindung liegt die Aufgabe zugrunde eine Scheibenbremse der gattungsgemäßen Art so weiterzuentwickeln, dass die Ermittlung der Zuspannkraft mit geringem konstruktivem und fertigungstechnischem Aufwand möglich ist und die Betriebskosten der Scheibenbremse gesenkt werden.

Diese Aufgabe wird eine Scheibenbremse mit den Merkmalen des Anspruchs 1 gelöst.

Die Erfindung macht sich zunutze, dass ein aus Analysen des Verformungsverhaltens von Bremssätteln für pneumatisch betätigte Scheibenbremsen bekanntes zuspannbedingtes Aufspreizen des Bremssattels zur aufgebrachten Zuspannkraft proportional ist. Dabei ist dieser Zusammenhang über die Lebensdauer des Bremssattels stabil und unterliegt im Wesentlichen, auch bei unterschiedlichen Betriebszuständen, nur geringen Störeinflüssen.

Die Erfindung zeichnet sich insbesondere dadurch aus, dass sie äußerst einfach zu realisieren ist und die dazu erforderliche bauliche Ausführung im Grunde mit wenigen, einfach herzustellenden und zu montierenden Teilen auskommt, die überdies nur sehr geringen betriebsbedingten Beanspruchungen unterliegen. Der geringe konstruktive und fertigungstechnische Aufwand ergibt sich vor allem aus der Verwendung des bei Scheibenbremsen für Nutzfahrzeuge üblicherweise eingesetzten Haltebügels als Korrespondenzteil zum Sensor.

Dabei wird bei einer Ausführungsvariante die relative Bewegung des Sattelrückens zum Sattelkopf entgegen der Zuspannrichtung durch eine Lageveränderung des am Sattelkopf oder am Sattelrücken starr befestigten Haltebügels zu dem gegenüberliegenden am Bremssattel befestigten Sensor ermittelt und an eine Auswerteeinheit übertragen.

Prinzipiell reicht dabei die Installation lediglich eines Sensors aus, der außenseitig am Bremssattel angebracht und unbeeinflusst von den an einer Zuspanneinrichtung wirkenden Kräften angeordnet sein kann.

Hierdurch ergibt sich eine für die Montage, elektrische Verschaltung sowie für Servicezwecke außerordentlich günstige Positionierung, die geringe Wartungs- und Instandhaltungskosten zur Folge hat.

Eine Temperaturabhängigkeit des Messsignals kann durch geeignete Maßnahmen ausreichend gemindert werden. Die durch eine bremsbedingte Erwärmung des Bremssattels sich ergebende Veränderung des Abstandes zwischen dem Sattelrücken und dem Sattelkopf und der damit zu messenden Größe wird kompensiert, indem das mit dem Sensor korrespondierende, einseitig festgesetzte Bauteil durch eine entsprechende konstruktive Gestaltung, eine angepasste Werkstoffwahl und eine entsprechende Anordnung am Bremssattel der gleichen Wärmeausdehnung unterliegt, wie der Bremssattel selbst bzw. dessen Zugstreben.

Eine Kompensation möglicherweise sich ergebender Fehler infolge unterschiedlicher Wärmeausdehnung kann durch eine selbsttätige Initialisierung des Auswertesystems in vorgegebenen zeitlichen Abständen zwischen den Messvorgängen und ggf. eine Korrekturrechnung, der eine Auswertung der von der Bremse umgesetzten Energie zugrunde liegt, erfolgen.

Diese Initialisierung kann dadurch geschehen, dass in nicht betätigter Stellung der Bremse z.B. im Minutenabstand, das Abstandssignal zwischen dem fixierten Bauteil und dem Sensor erfasst wird.

Bei einer Bremsung wird die Differenz aus dem während des Bremsens gemessenen aktuellen Messsignal zum zuletzt in ungebremster Stellung gemessenen Wert, einem Nullpunkt, gebildet. Bei der Ermittlung der Zuspannkraft wird also nicht der absolute Wert des Abstandssignals zugrunde gelegt, sondern dessen Änderung zum jeweils vor einer Bremsung festgestellten Betrag.

Weitere Möglichkeiten ergeben sich durch einen Vergleich des Messwertes der Sattelaufspreizung mit einem Positionssignal des Motors bei einer elektromechanischen Zuspannung. Dabei beinhaltet die Ermittlung des Zuspannweges der Bremse über das Motorpositionssignal neben der Sattelaufspreizung auch das Lüftspiel der Bremse sowie einen durch Kompressibilität und Unebenheiten der Bremsbeläge hervorgerufenen Kompressionshub.

Bei Kenntnis des Maßes der Sattelaufspreizung und des Bremsbelag-Verschleißes, z.B. mittels eines serienüblichen Bremsbelagverschleißsensors, sind Rückschlüsse auf den Zustand der Bremsbeläge bzw. des aktuellen Lüftspiels möglich.

Des weiteren kann bei einer ständigen Überprüfung der Korrelation zwischen dem Motorpositionssignal und der ermittelten Sattelaufspreizung bei Ausfall des Sensors zur Messung der Sattelaufspreizung ein Notbetrieb der Bremse unter Verwendung des Motorpositionssignals mit geringen Einschränkungen der Genauigkeit erfolgen.

Nach einer bevorzugten Ausbildung der Erfindung ist der Sensor in Korrespondenz mit dem das Basiselement bildenden Haltebügel bzw. mit einem daran befestigten separaten Basiselement als Hall-Sensor ausgebildet, wobei der gegenüber dem Haltebügel feststehende Hall-Sensor bestromt wird, während der Haltebügel als Magnet ausgebildet ist oder einen Magneten trägt, der sich an dem Hall-Sensor vorbeibewegt. Diese Methode ermöglicht einen entsprechend großen linearen Messbereich, gegenüber einer solchen bei der der Haltebügel auf den Sensor zubewegt wird.

Alternativ können das Korrespondenzteil am Bremssattel und der Sensor am Haltebügel befestigt sein.

Der Einsatz eines Hall-Sensors erfasst nur die relative Verschiebung des Haltebügels, wobei jeweils der Ausgangzustand vor Beginn einer Bremsung mit dem während der Bremsung sich einstellenden Ist-Zustand verglichen wird. Fertigungsbedingte Toleranz beziehungsweise deren Einflüsse auf das Messergebnis sind damit ausgeschlossen, während auftretende Veränderungen in Folge thermischer Dehnung aufgrund der kurzen Bremsdauer vernachlässigbar sind.

Bei zum Beispiel einem maximal möglichen Betrag der Relativverschiebung des Haltebügels zum Hall-Sensor von 1, 5 mm wird ein linearer Messbereich des Hall-Sensors von 4, 5 mm angewandt. D. h., es können Streuungen des Absolutwertes, zum Beispiel durch Toleranzeinflüsse oder Wärmedehnung, im Bereich von 3 mm, also dem doppelten Betrag des maximal möglichen Messwertes kompensiert werden.

Da dadurch der Absolutwert eines Abstandes nicht mehr erfasst wird, sondern nur noch die relative Veränderung der Position des Haltebügels zum Hall-Sensor sind keinerlei Kompensationsmaßnahmen für Störeinflüsse erforderlich. Ebenso sind, wenn überhaupt, werden nur geringe Anforderungen an die Genauigkeit und insbesondere die Wiederholgenauigkeit der Sensoreinrichtung grstellt.

Weitere vorteilhafte Ausbildungen der Erfindung sind in den Unteransprüchen gekennzeichnet.

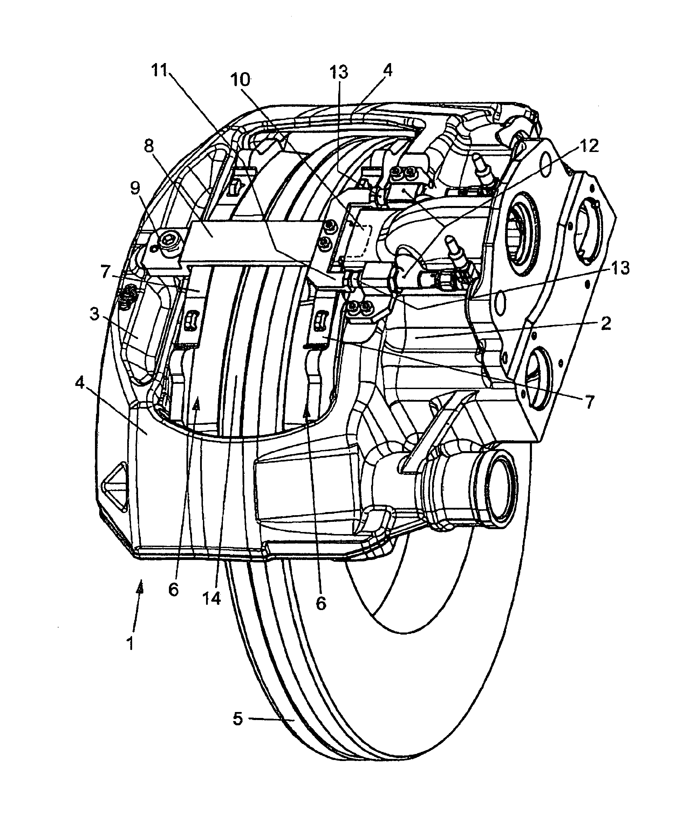

Ein Ausführungsbeispiel einer Scheibenbremse gemäß der Erfindung wird nachfolgend anhand der beigefügten Zeichnung beschrieben.

Die einzige Figur zeigt eine Scheibenbremse in einer perspektivischen Ansicht.

In der einzigen Figur ist eine pneumatisch oder elektromechanisch betreibbare Scheibenbremse dargestellt, die einen Bremssattel 1 aufweist, der eine Bremsscheibe 5 übergreift und in dem beidseitig der Bremsscheibe 5 angeordnete Bremsbeläge 6 gelagert sind, die mittels einer Zuspanneinrichtung zum Bremsen gegen die Bremsscheibe 5 pressbar sind.

Der Bremssattel besteht aus einem Sattelkopf 2 sowie einem Sattelrücken 3, die durch zwei Zugstreben 4 miteinander verbunden sind, die sich in Achsrichtung der Bremsscheibe 5 erstrecken und die in Umfangsrichtung der Bremsscheibe 5 eine Montageöffnung 14 des Bremssattels 1 begrenzen.

Die Bremsbeläge 6 sind unter Vorspannung im Bremssattel 1 gehalten, wozu jeder Bremsbelag 6 eine Belaghaltefeder 7 aufweist, an der sich ein Haltebügel 8 abstützt.

Dieser ist durch eine Schraube 9 fest mit dem Sattelrücken 3 verbunden, während das andere Ende axial verschiebbar in einer Aufnahmetasche 10 des Sattelkopfes 2 gelagert ist. Dabei überspannt der Haltebügel 8 die Montageöffnung 14 und erstreckt sich in seiner Länge in Achsrichtung der Bremsscheibe 5.

In seinem der Aufnahmetasche 10 zugewandten Endbereich weist der Haltebügel 8 einen U-förmigen Messbügel 11 auf, dessen beiden Schenkeln jeweils ein fest mit dem Sattelkopf 2 verbundener Sensor 12 zugeordnet ist, der berührungslos im Bereich einer Messstelle 13 in Wirkverbindung mit dem zugeordneten Schenkel des Messbügels 11 in Wirkverbindung steht.

Diese Sensoren 12 sind mit einer nicht dargestellten Auswerteeinheit verbunden, zur Ermittlung der beim Bremsen wirksamen Zuspannkraft.

Beim Bremsen spreizen sich der Sattelkopf 2 und der Sattelrücken 3, d.h., der Abstand zueinander, also die Breite der Montageöffnung 14 vergrößert sich.

Diese maßliche Änderung wird durch eine Vergrößerung eines Spaltes zwischen dem jeweiligen Schenkel des Messbügels 11 und dem zugeordneten Sensor 12 an der Messstelle 13 wirksam und durch den Sensor 12 erkannt.

Anstelle der im Ausführungsbeispiel gezeigten in Zuspannrichtung hintereinander liegenden Anordnung des Messbügels 11 und des Sensors 12 wird dieser, wenn er als Hall-Sensor ausgebildet ist, neben dem Haltebügel 8 beziehungsweise dem Messbügel 11 angeordnet, wobei der Haltebügel 8 als Korrespondenzelement mit einem beispielsweise stabförmigen Dauermagneten versehen sein kann.

### Bezugszeichenliste

- 1: Bremssattel
- 2: Sattelkopf
- 3: Sattelrücken
- 4: Zugstrebe
- 5: Bremsscheibe
- 6: Bremsbelag
- 7: Belaghaltefeder
- 8: Haltebügel
- 9: Schraube
- 10: Aufnahmetasche
- 11: Messbügel
- 12: Sensor
- 13: Messtelle
- 14: Montageöffnung

## Patentansprüche

1. Scheibenbremse mit einem eine Bremsscheibe (5) übergreifenden Bremssattel (1), der einen Sattelkopf (2) und einen damit durch Zugstreben (4) verbundenen Sattelrücken (3) aufweist und in dem beidseitig an die Bremsscheibe (5) anpressbare, mittels eines sich in Achsrichtung der Bremsscheibe (5) erstreckenden Haltebügels (8) radial gesicherte Bremsbeläge (6) gelagert sind, und mit einer an eine Auswerteeinheit angeschlossenen Messeinrichtung zur Ermittlung der beim Bremsen aufgebrachten Zuspannkraft **dadurch gekennzeichnet, dass** die Messeinrichtung zwei in Zuspannrichtung relativ zueinander bewegbare Basiselemente aufweist, von denen eines als Sensor (12) und das andere als ein damit in Wirkverbindung stehendes Korrespondenzteil ausgebildet ist, wobei ein Basiselement an dem einseitig am Sattelkopf (2) oder am Sattelrücken (3) eingespannten Haltebügel (8) und das andere Basiselement an der der Einspannseite des Haltebügels (8) gegenüberliegenden Seite am Bremssattel (1) angeordnet sind.

2. Scheibenbremse nach Anspruch 1, **dadurch gekennzeichnet, dass** der Haltebügel (8) am Sattelrücken (3) festgelegt ist und der Sensor (12) am Sattelkopf (2), wobei der Haltebügel (8) verschieblich in einer Aufnahmetasche (10) des Sattelkopfs (2) gelagert ist.

3. Scheibenbremse nach einem der Ansprüche 1 oder 2, **dadurch gekennzeichnet, dass** der Haltebügel (8) in seinem dem Sattelrücken abgewandten freien Endbereich als Korrespondenzteil einen Messbügel (11) aufweist, der mit dem Sensor (12) korrespondiert.

4. Scheibenbremse nach einem der Ansprüche 1 bis 3, **dadurch gekennzeichnet, dass** der Messbügel (11) U-förmig ausgebildet ist, wobei jeder Schenkel des Messbügels (11) einem Sensor (12) zugeordnet ist.

5. Schreibenbremse nach einem der Ansprüche 1 bis 4, **dadurch gekennzeichnet, dass** der Sensor (12) ein berührungsloser Sensor ist.

6. Scheibenbremse nach einem der Ansprüche 1 bis 5, **dadurch gekennzeichnet, dass** der Messstab bzw. der Haltebügel (8) in seiner wärmebedingten Längenausdehnung der Längenausdehnung der Zugstreben (4) bei gleicher Wärmebelastung entspricht.

7. Scheibenbremse nach einem der Ansprüche 1 bis 6, **dadurch gekennzeichnet, dass** der Sensor (12) als Hall-Sensor ausgebildet ist.

8. Scheibenbremse nach einem der Ansprüche 1 bis 7, **dadurch gekennzeichnet, dass** der Haltebügel (8) einen vorzugsweise stabförmigen Dauermagneten aufweist, der mit dem Hall-Sensor korrespondiert.

9. Scheibenbremse nach einem der Ansprüche 1 bis 8, **dadurch gekennzeichnet, dass** der Hall-Sensor in Zuspannrichtung neben dem Haltebügel (8) angeordnet ist.

## Claims

1. Disc brake having a brake calliper (1), which fits over a brake disc (5) and which has a calliper head (2) and a calliper back (3) connected thereto by tension struts (4) and in which are mounted brake pads (6) which can be pressed against the brake disc (5) from both sides and are secured radially by means of a retaining bracket (8) extending in the axial direction of the brake disc (5), and having a measuring device, connected to an evaluation unit, for determining the application force used in a braking operation, **characterised in that** the measuring device has two basic elements which can be moved relative to one another in the direction of brake application, one of which is designed as a sensor (12) and the other as a corresponding part operatively connected thereto, one basic element being arranged on the retaining bracket (8), which is clamped at one end to the calliper head (2) or to the calliper back (3), and the other basic element being arranged on the brake calliper (1) at the opposite end from the side at which the retaining bracket (8) is clamped.

2. Disc brake according to claim 1, **characterised in that** the retaining bracket (8) is fixed to the calliper back (3) and the sensor (12) is fixed to the calliper head (2), the retaining bracket (8) being mounted movably in a receiving pocket (10) in the calliper head (2).

3. Disc brake according to claim 1 or 2, **characterised in that** the retaining bracket (8) has as a corresponding part a measuring bracket (11) which corresponds to the sensor (12) in its free end region remote from the calliper back.

4. Disc brake according to any of claims 1 to 3, **characterised in that** the measuring bracket (11) is U-shaped, each leg of the measuring bracket (11) being associated with one sensor (12).

5. Disc brake according to any of claims 1 to 4, **characterised in that** the sensor (12) is a contactless sensor.

6. Disc brake according to any of claims 1 to 5, **characterised in that** the the heat-induced linear expansion of the measuring rod or retaining bracket (8) corresponds to the linear expansion of the tension struts (4) under the same thermal load.

7. Disc brake according to any of claims 1 to 6, **characterised in that** the sensor (12) is designed as a Hall-effect sensor.

8. Disc brake according to any of claims 1 to 7, **characterised in that** the retaining bracket (8) has a preferably bar-shaped permanent magnet, which corresponds to the Hall-effect sensor.

9. Disc brake according to any of claims 1 to 8, **characterised in that** the Hall-effect sensor is arranged adjacent to the retaining bracket (8) in the direction of brake application.

## Revendications

1. Frein à disque ayant un étrier (1) de frein recouvrant un disque (5) de frein et ayant une tête (2) d'étrier et un arrière (3) d'étrier qui y est relié par des tirants (4) et dans lequel sont montées des garnitures (6) de frein, pouvant être pressées des deux côtés sur le disque (5) de frein et fixées radialement, au moyen d'un arceau (8) de maintien s'étendant dans la direction axiale du disque (5) de frein, et comprenant un dispositif de mesure raccordé à une unité d'exploitation et destiné à déterminer la force de serrage appliquée lors du freinage, **caractérisé en ce que** le dispositif de mesure a deux éléments de base, mobiles l'un par rapport à l'autre dans la direction de serrage, dont l'un est constitué en capteur (12) et dont l'autre est constitué sous la forme d'une partie correspondante en liaison active avec lui, un élément de base étant disposé sur l'arceau (8) de maintien, serré d'un côté sur la tête (2) de l'étrier ou sur l'arrière (3) de l'étrier et l'autre élément de base étant monté sur l'étrier (1) de frein, du côté opposé au côté de serrage de l'arceau (8) de maintien.

2. Frein à disque suivant la revendication 1, **caractérisé en ce que** l'arceau (8) de maintien est fixé à l'arrière (3) de l'étrier et le capteur (12) à la tête (2) de l'étrier, l'arceau (8) de maintien étant monté coulissant dans une poche (10) de réception de la tête (2) de l'étrier.

3. Frein à disque suivant l'une des revendications 1 ou 2, **caractérisé en ce que** l'arceau (8) de maintien a, dans sa partie d'extrémité libre éloignée de l'arrière de l'étrier, comme partie de correspondance, un arceau (11) de mesure qui correspond au capteur (12).

4. Frein à disque suivant l'une des revendications 1 à 3, **caractérisé en ce que** l'arceau (11) de mesure est en forme de U, chaque branche de l'arceau (11) de mesure étant associée à un capteur (12).

5. Frein à disque suivant l'une des revendications 1 à 4, **caractérisé en ce que** le capteur (12) est un capteur sans contact.

6. Frein à disque suivant l'une des revendications 1 à 5, **caractérisé en ce que** la dilation longitudinale due à la chaleur du barreau de mesure ou de l'arceau (8) de maintien correspond, pour une même charge calorifique, à la dilatation longitudinale des tirants (4).

7. Frein à disque suivant l'une des revendications 1 à 6, **caractérisé en ce que** le capteur (12) est constitué sous la forme d'un capteur de Hall.

8. Frein à disque suivant l'une des revendications 1 à 7, **caractérisé en ce que** l'arceau (8) de maintien a un aimant permanent, de préférence sous forme de barreau, qui correspond au capteur de Hall.

9. Frein à disque suivant l'une des revendications 1 à 8, **caractérisé en ce que** le capteur de Hall est disposé, dans la direction de serrage, à côté de l'arceau (8) de maintien.
